# EUROPEAN PATENT APPLICATION

(11) **EP 3 845 782 A1**
(43) Date of publication of application: **07.07.2021**
(21) Application number: 19853456.2
(22) Date of filing: 09.08.2019
(51) Int. Cl.: F16J 15/328, B29C 33/12, B29C 45/14, F16J 15/18, F16J 15/3244, F16J 15/326, F16J 15/3232

(54) **SEAL MEMBER MANUFACTURING METHOD AND MOLDING MOLD**

(30) Priority: 29.08.2018 JP 2018159974
(71) Applicant: NOK Corporation, Minato-ku, Tokyo 105-8585 (JP)
(72) Inventor: KATO Takuya, Fukushima-shi, Fukushima 960-1193 (JP); SAKANO Yuya, Fukushima-shi, Fukushima 960-1193 (JP)
(74) Representative: Global IP Europe Patentanwaltskanzlei
(86) International application number: PCT/JP2019/031761
(87) International publication number: WO 2020/045072

(57) **Abstract**

A sealing device seals a gap between an inner member and an outer member that rotate relative to each other. The sealing device includes a sealing member. The sealing member includes a rigid ring formed of a rigid material including a sleeve part and a flange part extending radially outward from the sleeve part, and an elastic ring formed of an elastic material adhering closely to both surfaces of the flange part. The elastic ring includes an annular circular part and multiple water-discharging protrusions on a side of the sleeve part of the rigid ring, whereas the elastic ring includes an annular part on a side opposite the sleeve part. A mold for manufacturing the sealing member includes a first mold including a cylindrical cavity in which the sleeve part is supported, an annular circular cavity for forming the circular part, multiple protrusion cavities for forming the multiple water-discharging protrusions, and multiple posts disposed in the circular cavity and being brought into contact with the flange part of the rigid ring.

## Description

### TECHNICAL FIELD

The present invention relates to methods of manufacturing sealing members and molds therefor.

### BACKGROUND ART

Rolling bearings, such as ball bearings, are well known, and are used, for example, in hubs of automotive vehicles. A sealing device for sealing the inside of a rolling bearing is disclosed in Patent Document 1. The sealing device includes an annular body fixed to the outer race of the rolling bearing, a radial lip (grease lip) extending radially inward from the annular body, and two side lips (axial lips) extending laterally from the annular body. The radial lip is in contact with the outer peripheral surface of the inner race of the bearing or the outer peripheral surface of a part fixed to the inner race, and has a function of sealing lubricant (grease) inside the bearing, whereas the two side lips are in contact with a flange of the inner race, and have a function of sealing, so that foreign matter, such as water and dust, does not enter into the inside of the bearing from the outside.

### BACKGROUND DOCUMENTS

### Patent Documents

Patent Document 1: JP-B-3991200

### SUMMARY OF THE INVENTION

For this type of sealing device, there is demand for improvement in the function of preventing intrusion of water (including muddy water or salt water) into the inside of the sealed object (e.g., bearing) if the sealing device is used in a watery environment. Even if water does enter the sealing device, it is desirable for the water to be discharged rapidly.

Accordingly, the present invention provides a method of manufacturing a sealing member and a mold suitable for manufacturing a sealing member of a sealing device having superior ability to discharge water and superior ability to protect the sealed object from water.

A method of manufacturing a sealing member according to an aspect of the present invention is a method of manufacturing a sealing member provided in a sealing device located between an inner member and an outer member that rotate relative to each other for sealing a gap between the inner member and the outer member. The sealing member includes a rigid ring formed of a rigid material and is for being mounted on the inner member, the rigid ring including a sleeve part and a flange part extending radially outward from the sleeve part, and an elastic ring formed of an elastic material adhering closely to both surfaces of the flange part, the elastic ring including an annular circular part and multiple water-discharging protrusions on a side of the sleeve part of the rigid ring, the elastic ring including an annular part on a side opposite the sleeve part. The manufacturing method includes preparing a first mold including a cylindrical cavity in which the sleeve part of the rigid ring is supported, an annular circular cavity for forming the circular part, multiple protrusion cavities (cavities for protrusions) for forming the multiple water-discharging protrusions, and multiple posts disposed in the circular cavity and being brought into contact with the flange part of the rigid ring; preparing a second mold including an annular cavity for forming the annular part; inserting the sleeve part of the rigid ring into the cylindrical cavity of the first mold; bringing the first mold and the second mold together such that the flange part of the rigid ring is disposed within the annular cavity of the second mold; filling the annular cavity of the first mold and the circular cavity and the multiple protrusion cavities of the second mold with a material for the elastic ring while bringing the flange part into contact with the multiple posts; and removing the sealing member by separating the second mold from the first mold after curing the material for the elastic ring.

According to this manufacturing method, when the internal space defined by the first mold and the second mold is filled with the material for the elastic ring, the flange part of the rigid ring is brought into contact with the multiple posts of the first mold. Accordingly, since the flange part is supported, i.e., reinforced by the posts during filling of the material, deformation of the flange part due to pressure caused by filling of the material is suppressed. In this manner, the dimensional accuracy of the sealing member can be enhanced.

Preferably, each of the water-discharging protrusions of the sealing member to be manufactured includes an inclined side surface that intersects at an acute angle with respect to a rotational direction in which at least one of the inner member and the outer member rotates, and the multiple posts of the first mold are disposed in portions different from portions forming the inclined side surface in the circular cavity. In this case, the multiple posts do not hinder the formation of the inclined side surface of each water-discharging protrusion, and therefore, the degree of freedom in the design of the water-discharging protrusions is ensured.

A mold for manufacturing a sealing member according to an aspect of the present invention is a mold for manufacturing a sealing member provided in a sealing device located between an inner member and an outer member that rotate relative to each other for sealing a gap between the inner member and the outer member. The sealing member includes a rigid ring formed of a rigid material and is for being mounted on the inner member, the rigid ring including a sleeve part and a flange part extending radially outward from the sleeve part, and an elastic ring formed of an elastic material adhering closely to both surfaces of the flange part, the elastic ring including an annular circular part and multiple water-discharging protrusions on a side of the sleeve part of the rigid ring, the elastic ring including an annular part on a side opposite the sleeve part. The mold includes a first mold including a cylindrical cavity in which the sleeve part of the rigid ring is supported, an annular circular cavity for forming the circular part, multiple protrusion cavities for forming the multiple water-discharging protrusions, and multiple posts disposed in the circular cavity and being brought into contact with the flange part of the rigid ring; and a second mold including an annular cavity for forming the annular part.

### BRIEF DESCRIPTION OF THE DRAWINGS

Fig. 1 is a partial cross-sectional view of an example of a rolling bearing in which a sealing device according to any one of the embodiments of the present invention is used;
Fig. 2 is a partial cross-sectional view of a sealing device according to a first embodiment of the present invention;
Fig. 3 is a front view of a second sealing member of the sealing device according to the first embodiment;
Fig. 4 is a cross-sectional view taken along line IV-IV in Fig. 3;
Fig. 5 is a perspective view of the second sealing member of the sealing device according to the first embodiment;
Fig. 6 is a cross-sectional view showing a step in manufacturing the second sealing member of the sealing device according to the first embodiment;
Fig. 7 is a cross-sectional view showing a step after Fig. 6;
Fig. 8 is a cross-sectional view showing an undesirable step in manufacturing the second sealing member;
Fig. 9 is a front view showing a second sealing member according to a modification of the first embodiment;
Fig. 10 is a front view showing a second sealing member according to another modification of the first embodiment;
Fig. 11 is a partial cross-sectional view of a sealing device according to a second embodiment of the present invention; and
Fig. 12 is a partial cross-sectional view of a sealing structure according to a third embodiment of the present invention.

### DESCRIPTION OF EMBODIMENTS

Hereinafter, with reference to the accompanying drawings, multiple embodiments according to the present invention will be described.

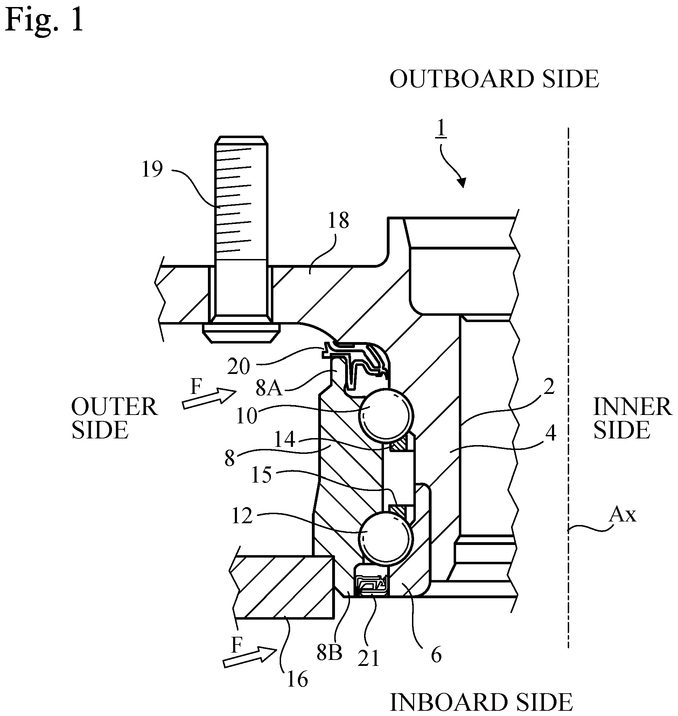

Fig. 1 shows a hub bearing for an automotive vehicle, which is an example of a rolling bearing, in which a sealing device according to any one of the embodiments of the present invention is used. However, the use of the present invention is not limited to hub bearings, and the present invention can also be applied to other rolling bearings. In the following description, the hub bearing is a ball bearing. However, the use of the present invention is not limited to ball bearings, and the present invention can also be applied to other rolling bearings, such as roller bearings and needle bearings, having other types of rolling elements. The present invention is also applicable to rolling bearings used in machines other than automotive vehicles.

The hub bearing 1 includes a hub (inner member) 4 having a hole 2 into which a spindle (not shown) is inserted, an inner race (inner member) 6 attached to the hub 4, an outer race (outer member) 8 located outside of the hub 4 and the inner race 6, multiple balls 10 arranged in a row between the hub 4 and the outer race 8, multiple balls 12 arranged in a row between the inner race 6 and the outer race 8, and multiple retainers 14 and 15 for retaining the balls in place.

Whereas the outer race 8 is stationary, the hub 4 and the inner race 6 rotate as the spindle rotates.

The common central axis Ax of the spindle and hub bearing 1 extends in the vertical direction in Fig. 1. In Fig. 1, only the left part with respect to the central axis Ax is shown. Although not shown in detail, the upper side of Fig. 1 is the outer side (outboard side) of the automotive vehicle on which the wheels are arranged, whereas the lower side is the inner side (inboard side) on which the differential gears are arranged. The outer side and the inner side shown in Fig. 1 mean the outer side and the inner side in radial directions, respectively.

The outer race 8 of the hub bearing 1 is fixed to the hub knuckle 16. The hub 4 has an outboard side flange 18 extending further outward in radial directions than the outer race 8. A wheel can be attached to the outboard side flange 18 by hub bolts 19.

A sealing device 20 that seals the gap between the outer race 8 and the hub 4 is located near the end of the outer race 8 on the outboard side, and inside the end of the outer race 8 on the inboard side. Another sealing device 21 that seals the gap between the outer race 8 and the inner race 6 is located inside the end of the inner side of the outer race 8. The function of the sealing devices 20 and 21 prevents the grease, that is, the lubricant, from flowing out from the inside of the hub bearing 1 and prevents foreign matter (water, including muddy water or salt water) from entering the inside of the hub bearing 1 from the outside. In Fig. 1, each arrow F indicates an example of the direction of foreign matter flow from the outside.

The sealing device 20 is located between the rotating hub 4 and the cylindrical end portion 8A on the outboard side of the stationary outer race 8 of the hub bearing 1 to seal the gap between the hub 4 and the outer race 8. The sealing device 21 is located between the rotating inner race 6 and the end portion 8B on the inboard side of the outer race 8 of the hub bearing 1 to seal the gap between the inner race 6 and the outer race 8.

### FIRST EMBODIMENT

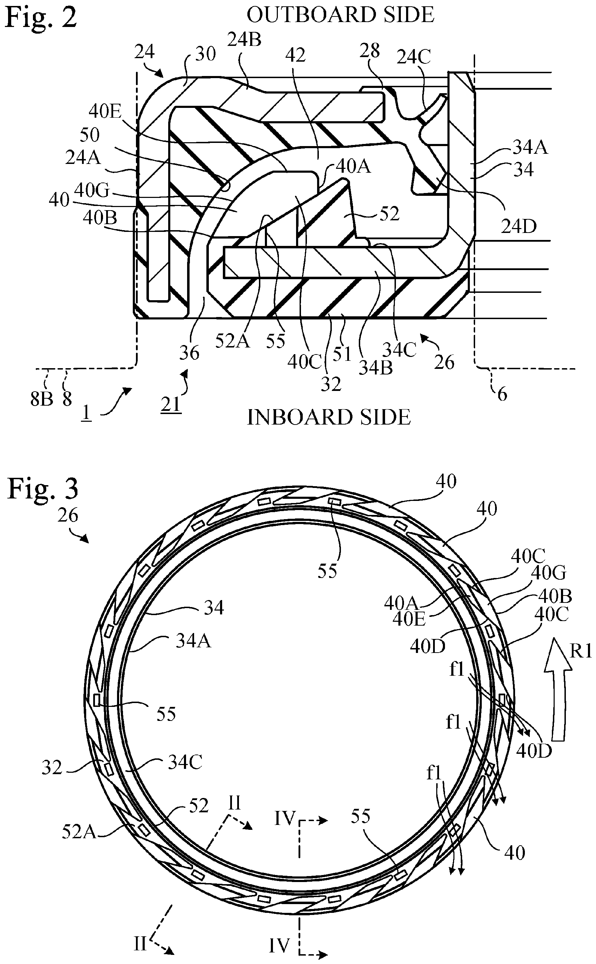

As shown in Fig. 2, the sealing device 21 is located in a gap between the end portion 8B on the inboard side of the outer race 8 of the hub bearing 1 and the inner race 6 of the hub bearing 1. Although the sealing device 21 has an annular shape, only the left part is shown in Fig. 2. As is apparent from Fig. 2, the sealing device 21 has a composite structure including a first sealing member 24 and a second sealing member 26.

The first sealing member 24 is a stationary sealing member that is attached to the outer race 8 and does not rotate. The first sealing member 24 is of a composite structure having an elastic ring 28 and a rigid ring 30. The elastic ring 28 is made of an elastic material such as an elastomer. The rigid ring 30 is made of a rigid material such as metal, and reinforces the elastic ring 28. The rigid ring 30 has a substantially L-shaped cross-sectional shape. A part of the rigid ring 30 is embedded in the elastic ring 28 and is in close contact with the elastic ring 28.

The first sealing member 24 has a cylindrical part 24A, an annular part 24B, and radial lips 24C and 24D. The cylindrical part 24A constitutes a mounted part that is mounted on the outer race 8. Specifically, the cylindrical part 24A is engaged by interference fit (that is, is press-fitted) into the end portion 8B of the outer race 8. The annular part 24B, which has an annular shape, is located radially inside the cylindrical part 24A, and expands radially inward toward the inner race 6. The cylindrical part 24A and the annular part 24B are formed of the rigid ring 30 and the elastic ring 28.

The radial lips 24C and 24D extend from the inner end of the annular part 24B toward the second sealing member 26, and the distal ends of the radial lips 24C and 24D are in contact with the second sealing member 26. The radial lips 24C and 24D are formed of the elastic ring 28.

The second sealing member 26 can also be called a slinger, that is, a rotational sealing member. The second sealing member 26 is mounted on the inner race 6, and when the inner race 6 rotates, the second sealing member 26 rotates together with the inner race 6 and deflects foreign matter that was splashed and comes from the outside.

In this embodiment, the second sealing member 26 is also of a composite structure having an elastic ring 32 and a rigid ring 34. The rigid ring 34 is made of a rigid material such as a metal.

The rigid ring 34 has a substantially L-shaped cross-sectional shape. Specifically, the rigid ring 34 includes a cylindrical sleeve part 34A and an annular flange part 34B extending radially outward from the sleeve part 34A. The sleeve part 34A constitutes a mounted part that is mounted on the inner race 6. Specifically, an end portion of the inner race 6 is engaged by interference fit (that is, is press-fitted) into the sleeve part 34A.

The flange part 34B is located radially outside the sleeve part 34A, expands radially outward, and faces the annular part 24B of the first sealing member 24. In this embodiment, the flange part 34B is a flat plate and lies on a plane perpendicular to the axis of the sleeve part 34A.

The elastic ring 32 adheres closely to both surfaces of the flange part 34B of the rigid ring 34.
As will be described later, the elastic ring 32 has an annular circular protrusion (circular part) 52 and multiple water-discharging protrusions 40 on the side of sleeve part 34A of the rigid ring 34. The elastic ring 32 has an annular part 51 on the side opposite to the sleeve part 34A.

In this embodiment, the annular part 51 of the elastic ring 32 is provided for measuring the rotation speed of the inner race 6. Specifically, the elastic ring 32 is formed of an elastomer material containing magnetic metal powder and ceramic powder, and the annular part 51 has a large number of S poles and N poles by the magnetic metal powder. In the elastic ring 51, a large number of S poles and N poles are alternately arranged at equiangular intervals in the circumferential direction. The rotation angle of the annular part 51 can be measured by a magnetic rotary encoder (not shown). Since the material of the elastic ring 32 contains metal powder, it has a higher hardness than that of normal elastomer materials and is not easily damaged by foreign matter.

The radial lip 24C of the first sealing member 24 is a grease lip, extending radially inward from the inner end of the annular part 24B. The grease lip 24C extends toward the sleeve part 34A of the second sealing member 26, and the distal end of the grease lip 24C is in contact with the sleeve part 34A. The grease lip 24C extends radially inward and toward the outboard side, and plays a main role in preventing the lubricant from flowing out from the inside of the hub bearing 1.

The radial lip 24D is a dust lip, extending laterally from the inner end of the annular part 24B. The dust lip 24D extends radially outward and toward the inboard side. The dust lip 24D also extends toward the sleeve part 34A of the second sealing member 26, and the distal end of the dust lip 24D is in contact with the sleeve part 34A. The dust lip 24D plays a main role in preventing foreign matter from flowing into the hub bearing 1 from the outside.

Whereas the first sealing member 24 is attached to the stationary outer race 8, the inner race 6 and the second sealing member 26 rotate, so that the radial lips 24C and 24D slide on the sleeve part 34A of the second sealing member 26, respectively.

An annular clearance 36 is provided between the distal end on the inboard side of the cylindrical part 24A of the first sealing member 24 and the outer end edge of the second sealing member 26. Through the clearance 36, foreign matter may enter a space 42 between the annular part 24B of the first sealing member 24 and the flange part 34B of the second sealing member 26. Conversely, foreign matter in the space 42 can be discharged through the clearance 36.

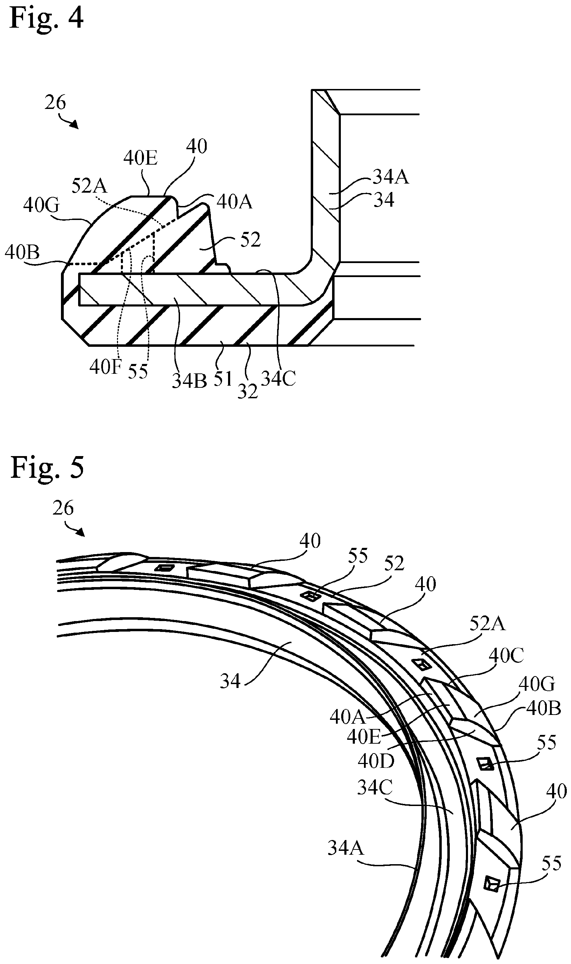

Fig. 3 is a front view of the second sealing member 26, whereas Fig. 4 is a cross-sectional view taken along line IV-IV in Fig. 3. Fig. 2 is a cross-sectional view of the sealing device 21 taken along line II-II in Fig. 3. Fig. 5 is a perspective view of the second sealing member 26.

As shown in Figs. 2 to 5, an annular circular protrusion 52 is supported on the second sealing member 26. The circular protrusion 52 protrudes toward the annular part 24B of the first sealing member 24 and has a generally triangular cross-section, as shown in Figs. 2 and 4. The circular protrusion 52 has an inclined surface 52A that is inclined such that the more radially inward the positions on the inclined surface 52A, the more distant from the flange part 34B of the second sealing member 26.

In this embodiment, the circular protrusion 52 is integrally mounted on a portion of the elastic ring 32 that covers the surface 34C of the flange part 34B that faces the annular part 24B. In other words, the circular protrusion 52 is a part of the elastic ring 32. Accordingly, the circular protrusion 52 is formed of the same material as that of the elastic ring 32, i.e., an elastomer material containing magnetic metal powder and ceramic powder, similarly to the water-discharging protrusions 40.

Multiple water-discharging protrusions 40, which protrude toward the annular part 24B of the first sealing member 24, are supported by the second sealing member 26. The water-discharging protrusions 40 have the same shape and the same size, and are arranged at equiangular intervals in the circumferential direction. As shown in Fig. 2, the water-discharging protrusions 40 protrude from the inclined surface 52A of the circular protrusion 52 into the space 42 between the annular part 24B of the first sealing member 24 and the flange part 34B of the second sealing member 26.

In this embodiment, the multiple water-discharging protrusions 40 are integrally mounted on a portion of the elastic ring 32 that covers the surface 34C of the flange part 34B that faces the annular part 24B. In other words, the water-discharging protrusions 40 are portions of the elastic ring 32. Therefore, the water-discharging protrusions 40 are formed of the same material as that of the elastic ring 32, that is, an elastomer material containing magnetic metal powder and ceramic powder.

In this embodiment, as shown in Fig. 3, each water-discharging protrusion 40 has a substantially quadrangular outline, specifically a substantially rhombic outline, when viewed along the axial direction of the second sealing member 26. As shown in Figs. 2 and 4, each of the water-discharging protrusions 40 has a substantially rectangular outline in which one corner is formed in an arc shape when viewed along the lateral direction of the second sealing member 26.

More specifically, as shown in Fig. 3, each water-discharging protrusion 40 has a substantially rhombic outline defined by an inner arc surface 40A, an outer arc line 40B, and two inclined side surfaces 40C and 40D. The outer arc line 40B substantially coincides with the outer peripheral contour of the elastic ring 32 covering the outer peripheral contour of the rigid ring 34 in the second sealing member 26.

As shown in Figs. 2 and 4, each water-discharging protrusion 40 has an outline defined by the inner arc surface 40A, a top surface 40E, a curved surface 40G, and a bottom surface 40F.
The bottom surface 40F lies on the same plane as the inclined surface 52A of the circular protrusion 52. The top surface 40E is parallel to the surface 34C of the flange part 34B. The curved surface 40G is curved in an arc shape so that the more radially inward the positions on the curved surface 40G, the more distant from the flange part 34B.

The elastic ring 28 of the first sealing member 24 has a curved surface 50 extending from the cylindrical part 24A to the annular part 24B. The curved surface 50 is curved in an arc shape so that the more radially inward the positions on the curved surface 50, the more distant from the flange part 34B of the second sealing member 26. The curved surface 40G of the water-discharging protrusion 40 faces the curved surface 50 of the first sealing member 24 and is formed substantially in parallel with the curved surface 50. The curved surface 50 defines a narrow space 42 in which the water-discharging protrusion 40 having the curved surface 40G can rotate.

Instead of the curved surface 40G of the water-discharging protrusion 40, an inclined surface may be provided such that the more radially inward the positions on the inclined surface, the more distant from the flange part 34B. In this case, the first sealing member 24 may be provided with an inclined surface that is inclined away from the flange part 34B and substantially parallel to the inclined surfaces of the water-discharging protrusions 40.

In Fig. 3, arrow R1 indicates the rotational direction of the second sealing member 26 (rotational direction of the inner race 6) when the automotive vehicle provided with the hub bearing 1 moves forward. The inner arc surface 40A and the outer arc line 40B extend in arc shapes along the rotational direction R1. In other words, each of the inner arc surface 40A and the outer arc line 40B overlaps a circle (not shown) concentric with the sleeve part 34A. On the other hand, the inclined side surface 40C intersects with the rotational direction R1 at an acute angle, whereas the inclined side surface 40D intersects with the rotational direction R1 at an obtuse angle.

As described above, foreign matter (including water and dust) may intrude into the space 42 between the annular part 24B of the first sealing member 24 and the elastic ring 32 covering the flange part 34B of the second sealing member 26 (see Fig. 2). However, multiple water-discharging protrusions 40 protrude into the space 42, and each water-discharging protrusion 40 has an inclined side surface 40C that intersects at an acute angle with the rotational direction R1 of the inner race 6 (see Fig. 3). Therefore, as the inner race 6 and the second sealing member 26 rotate, the water in the space 42 flows in the direction opposite to the rotational direction R1 of the inner race 6 and the second sealing member 26 relative to the rotation of the second sealing member 26 along the inclined side surface 40C as depicted by arrows f1 in Fig. 3. The inclined side surface 40C that intersects with the rotational direction R1 at an acute angle promotes smooth flow of water. The water flowing in this way is quickly discharged from the space 42 through the clearance 36 (see Fig. 2). For this reason, the sealing device 21 has superior ability to protect the hub bearing 1 that is to be sealed off from the water. Furthermore, for the sealing device 21 itself, deterioration, which is accelerated in the presence of water (including muddy water or salt water), is reduced. Since the clearance 36 is annular, water flows out of the space 42 through a part of the clearance 36, whereas air outside the sealing device 21 flows into the space 42 through the other part of the clearance 36. The air flowing into the space 42 promotes the outflow of water from the space 42, and reduces the probability that the pressure in the space 42 will become negative and deform the lips 24C and 24D unexpectedly.

By providing the radial lips 24C and 24D to the first sealing member 24, it is possible to improve the reliability of blocking foreign matter. As described above, since the sealing device 21 has superior ability to discharge water by the water-discharging protrusions 40, it is not necessary to increase the contact pressure of the radial lips 24C and 24D to the sleeve part 34A of the second sealing member 26. Therefore, it is possible to suppress or reduce the torque caused by sliding of the radial lips 24C and 24D on the second sealing member 26 while improving the ability to discharge water.

As described above, since the sealing device 21 has superior ability to discharge water by the water-discharging protrusions 40, the first sealing member 24 does not have a portion that is in contact with the flange part 34B of the second sealing member 26, for example, an axial lip for preventing intrusion of foreign matter. Therefore, it is possible to eliminate the torque caused by sliding of the portion of the first sealing member 24 to the second sealing member 26. Therefore, the energy efficiency of the automotive vehicle can be increased.

The method for forming the water-discharging protrusions 40 may be, for example, pressing using a mold or injection molding. In this case, the circular protrusion 52 and the water-discharging protrusions 40 are formed simultaneously with the formation of the elastic ring 32.

As shown in Figs. 2 to 5, holes 55 are formed on the circular protrusion 52 of the elastic ring 32 of the second sealing member 26, each hole 55 being a trace of a post 76 of the mold, which will be described later. The holes 55 have the same shape and the same size, and are arranged at equiangular intervals in the circumferential direction. In this embodiment, as shown in Fig. 3, the same number of holes 55 as the number of water-discharging protrusions 40 are arranged between neighboring water-discharging protrusions 40. The angular intervals between the holes 55 are the same as the angular intervals between the water-discharging protrusions 40. The holes 55 are rectangular, but they may also be circular or shaped otherwise.

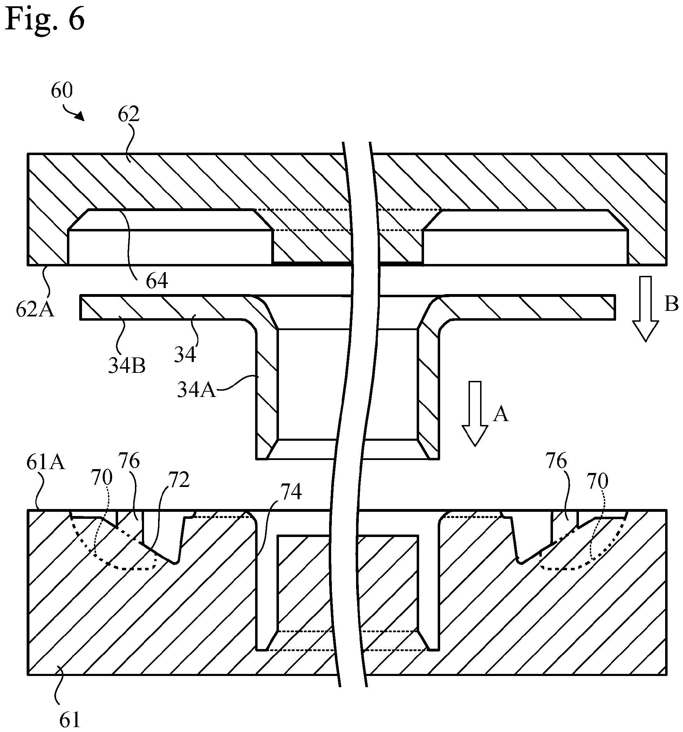

Hereinafter, a method of manufacturing the second sealing member 26 will be described. As shown in Fig. 6, a mold 60 for manufacturing the second sealing member 26 is prepared. The mold 60 is a split mold having a first mold 61 and a second mold 62. The first mold 61 is disposed below, whereas the second mold 62 is disposed above, with the flat lower surface 62A of the second mold 62 being brought into contact with the flat upper surface 61A of the first mold 61.

The first mold 61 disposed below has a cylindrical cavity 74, an annular circular cavity 72, and multiple protrusion cavities (cavities for protrusions) 70. The cylindrical cavity 74 supports the sleeve part 34A of rigid ring 34. Specifically, the sleeve part 34A is inserted into the cylindrical cavity 74.

The circular cavity 72 is located radially outward of the cylindrical cavity 74. The circular cavity 72 is a space that forms the annular inclined circular protrusion 52 of the elastic ring 32. Multiple posts 76 are formed within the circular cavity 72. The posts 76 are brought into contact with the flange part 34B of the rigid ring 34.

Each protrusion cavity 70 communicates with the circular cavity 72. The protrusion cavities 70 are spaces for forming the multiple water-discharging protrusions 40 of the elastic ring 32.

A plan view of the first mold 61 is not shown, but one skilled in the art will appreciate this from Fig. 3 showing the second sealing member 26. Traces of the multiple posts 76 are the holes 55, and therefore, the posts 76 have the same shape and the same size, and are arranged at equiangular intervals in the circumferential direction. The protrusion cavities 70 forming the water-discharging protrusions 40 also have the same shape and size, and are arranged at equiangular intervals in the circumferential direction. The same number of posts 76 as the number of the protrusion cavities 70 are disposed between neighboring protrusion cavities 70.

The second mold 62 disposed above has an annular cavity 64. The annular cavity 64 is a space for forming the annular part 51 of the elastic ring 32. Inside the annular cavity 64, the flange part 34B of the rigid ring 34 is disposed.

After the first mold 61 and the second mold 62 are prepared, the sleeve part 34A of the rigid ring 34 is inserted into the cylindrical cavity 74 of the first mold 61, as indicated by arrow A in Fig. 6. Then, the second mold 62 is brought together with the first mold 61 such that the flange part 34B of the rigid ring 34 is located within the annular cavity 64 of the second mold 62, as indicated by arrow B in Fig. 6. At this time, the flat lower surface 62A of the second mold 62 is brought into contact with the flat upper surface 61A of the first mold 61.

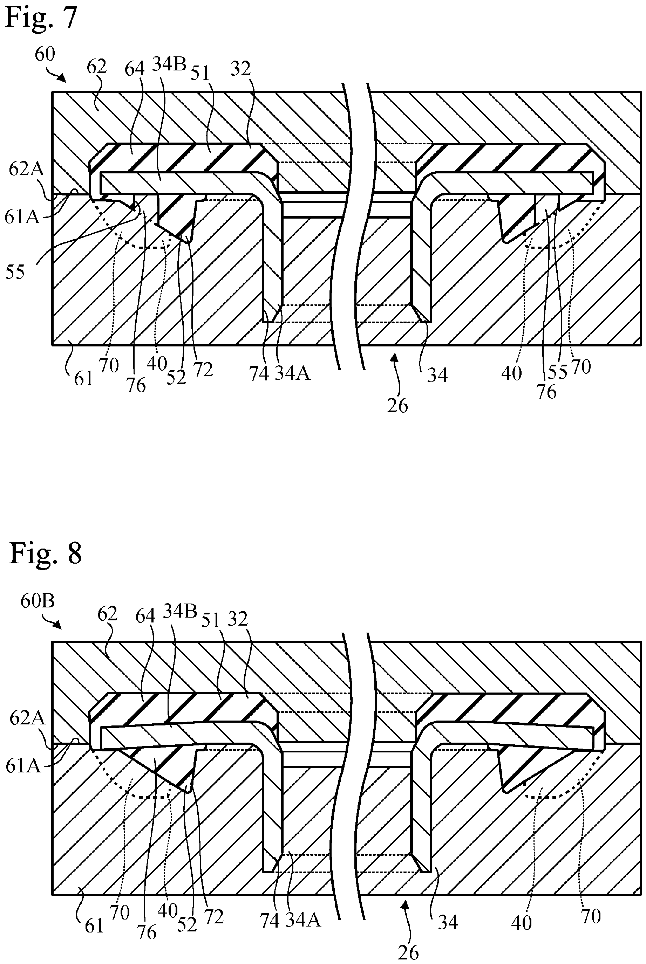

Fig. 7 shows a state in which the first mold 61 and the second mold 62 are brought together. As is apparent from Fig. 7, around the flange part 34B of the rigid ring 34, there are internal spaces for forming the elastic ring 32 having the annular part 51, the circular protrusion 52, and the water-discharging protrusions 40, i.e., the annular cavity 64, the circular cavity 72, and the protrusion cavities 70. In the mold 60, only the multiple posts 76 disposed within the protrusion cavities 70 are in contact with the radial outer portion of the flange part 34B.

In this manufacturing method, the annular cavity 64 of the first mold 61, and the circular cavity 72 and the multiple protrusion cavities 70 of the second mold 62 are filled with an elastomer material, which is a material for the elastic ring 32, while the flange parts 34B are brought into contact with the multiple posts 76. The process of filling the material for the elastic ring 32 may be pressing or injection molding, as described above.

In the case of pressing, typically, the material for the elastic ring 32 is placed at desired locations in the mold 60, and then the material is pressed by the molds 61 and 62 before the first mold 61 and the second mold 62 are brought together. In this case, the material may penetrate into the clearances between the posts 76 and the flange part 34B and may occlude part of the holes 55.

In the case of injection molding, typically, the material for the elastic ring 32 is injected into the internal space of the mold 60 after the first mold 61 and the second mold 62 are brought together.

After the material for the elastic ring 32 filled in the mold 60 is cured, the second mold 62 is separated from the first mold 61, and the second sealing member 26 shown in Figs. 3 to 5 is taken out. Thereafter, the magnetic metal powder dispersed in the annular part 51 of the elastic ring 32 is magnetized to form a large number of S poles and N poles. In this manner, the second sealing member 26 is completed.

According to this manufacturing method, when the internal space defined by the first mold 61 and the second mold 62 is filled with the material for the elastic ring 32, the flange part 34B of the rigid ring 34 is brought into contact with the multiple posts 76 of the first mold 61. Accordingly, since the flange part 34B is supported, i.e., reinforced by the posts 76 during filling of the material, deformation of the flange part 34B due to the pressure caused by filling of the elastomer material is suppressed. In this manner, the dimensional accuracy of the second sealing member 26 can be enhanced.

Fig. 8 shows a method of manufacturing the second sealing member 26 using a mold 60B of a comparative example without the posts 76. The first mold 61 of the mold 60B does not have the posts 76. The other features are the same as those of the mold 60 described above. In this comparative example, the radial outer portion of the flange part 34B are not in contact with any portion of the mold 60. Accordingly, the pressure due to filling the elastomer material causes the flange part 34B to deform. In particular, since the annular part 51 of the elastic ring 32 is thick and has a large area, the flange part 34B may be deformed toward the side of the sleeve part 34A by means of the force of the elastomer material filled in the annular cavity 64. By using the mold 60 shown in Fig. 7, such deformation of the flange part 34B is suppressed.

In this embodiment, the multiple posts 76 of the first mold 61 are disposed between neighboring protrusion cavities 70, and do not overlap the protrusion cavities 70. Therefore, the post 76 does not hinder the formation of the water-discharging protrusions 40, and therefore, the degree of freedom in the design of the water-discharging protrusions 40 is ensured.

In this embodiment, the first mold 61 is a lower mold, whereas the second mold 62 is an upper mold, but the first mold 61 may be used as an upper mold, whereas the second mold 62 may be used as a lower mold.

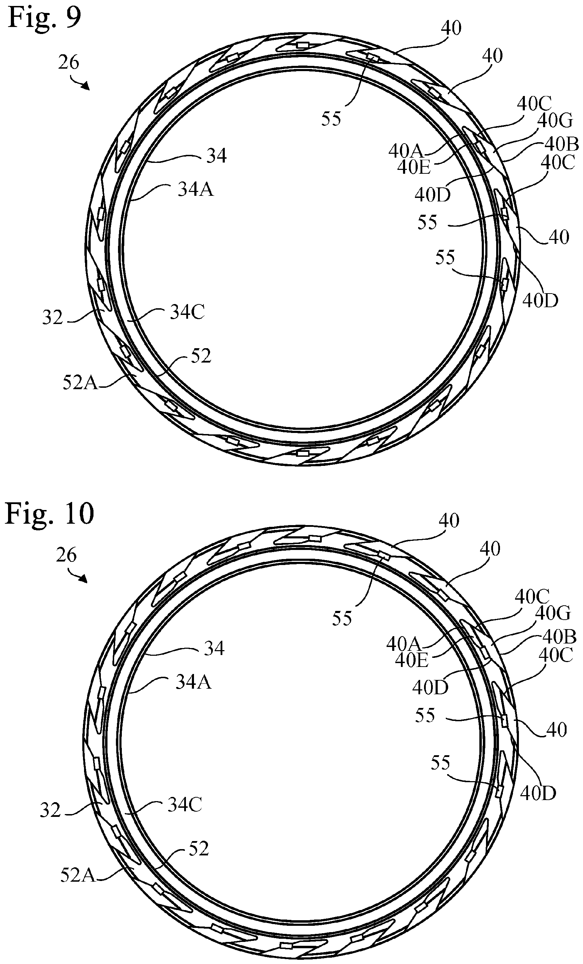

Each of Figs. 9 and 10 shows a second sealing member 26 according to a modification of this embodiment. In the modification shown in Fig. 9, the same number of holes 55 as the number of water-discharging protrusions 40 are formed on the water-discharging protrusions 40 (and the circular projection 52 underlying the water-discharging protrusions 40). Therefore, in the first mold 61, the same number of posts 76 as the number of protrusion cavities 70 are arranged within the protrusion cavities 70 (and the circular cavity 72 overlapping with the protrusion cavities 70). In the modification shown in Fig. 10, the same number of holes 55 as the number of water-discharging protrusions 40 are formed on the circular protrusion 52 so as to overlap with the inclined side surfaces 40D of the water-discharging protrusions 40. Therefore, in the first mold 61, the same number of posts 76 as the number of protrusion cavities 70 are formed within the circular cavity 72 so as to overlap the portions of the protrusion cavities 70 that form the inclined side surfaces 40D.

In both the modification of Fig. 9 and the modification of Fig. 10, the holes 55 do not overlap the inclined side surfaces 40C of the water-discharging protrusions 40 that promote the outflow of water (see Fig. 3). Therefore, in the first mold 61, the posts 76 are disposed in portions different from the portions forming the inclined side surfaces 40C within the circular cavity 72. In this manner, the posts 76 do not hinder the formation of the inclined side surface 40C of each water-discharging protrusion 40, and therefore, the degree of freedom in design of the water-discharging protrusions 40 is ensured.

In the first embodiment and the modifications of Figs. 9 and 10, the same number of through holes 55 as the number of water-discharging protrusions 40 is provided (i.e., the same number of posts 76 as the number of protrusion cavities 70 is provided). However, the number of posts 76 may be different from the number of protrusion cavities 70.

### SECOND EMBODIMENT

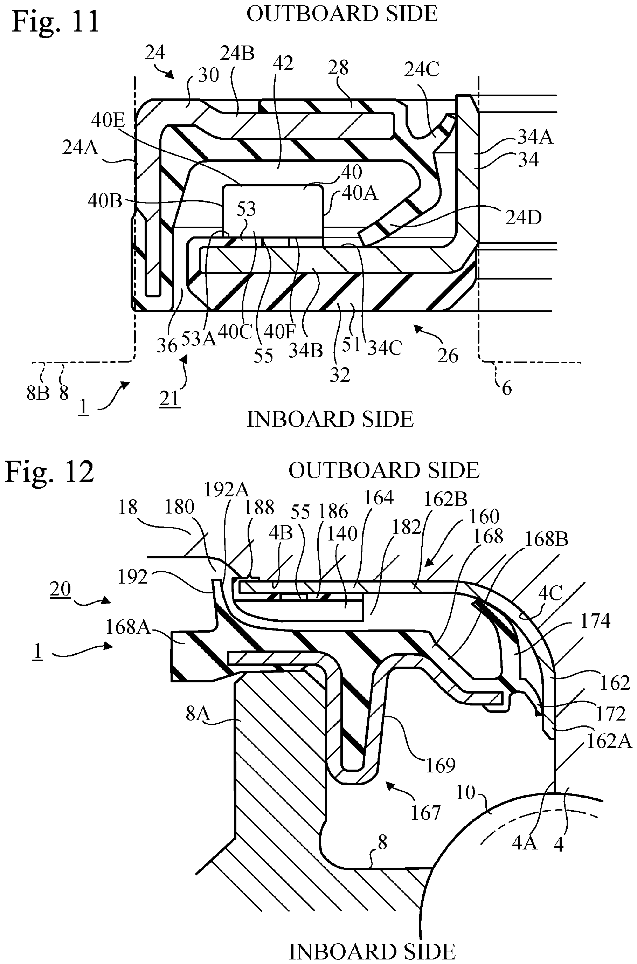

Fig. 11 is a cross-sectional view showing a sealing device 21 according to a second embodiment of the present invention. In Fig. 11, the same reference symbols are used to identify components already described, and those components will not be described in detail. The sealing device 21 according to the second embodiment has a first sealing member 24 and a second sealing member 26 that are different in detail from those of the first embodiment. However, the effect of promoting the outflow of water by the water-discharging protrusions 40 is also achieved in the second embodiment.

Instead of the inclined circular protrusion 52, the elastic ring 32 of the second sealing member 26 has a flat annular circular part 53 on the side of the sleeve part 34A of the rigid ring 34. The multiple water-discharging protrusions 40 protrude from a surface 53A of the circular part 53 on the side of the annular part 24B into the space 42 between the annular part 24B of the first sealing member 24 and the flange part 34B of the second sealing member 26. In other words, the bottom surface 40F of the water-discharging protrusion 40 lies on the same plane as the inclined surface 52A of the circular protrusion 52. The holes 55 are formed on the circular part 53 as the traces of the posts 76 of the mold.

As is clear from comparison between Fig. 2 and Fig. 11, the second sealing member 26 according to the second embodiment can be manufactured by the above-described manufacturing method using substantially the same mold as the above-described mold 60.

### THIRD EMBODIMENT

The first and second embodiments described above relate to a sealing device 21 on the inboard side of the hub bearing 1. A third embodiment of the present invention relates to a sealing structure including a sealing device 20 on the outboard side of the hub bearing 1.

As shown in Fig. 12, the sealing device 20 includes a rotational sealing member 160 that rotates together with the hub 4, and a stationary sealing member 167 that is fixed to the outer race 8.

The rotational sealing member 160 is fixed to the periphery of the hub 4. Although the stationary sealing member 167 and the rotational sealing member 160 are annular, only the left parts thereof are shown in Fig. 12.

The stationary sealing member 167 is of a composite structure having an elastic ring 168 and a rigid ring 169. Parts of the rigid ring 169 are embedded in the elastic ring 168 and are in close contact with the elastic ring 168. The part of the rigid ring 169 having a U-shaped cross section is engaged by interference fit (that is, is press-fitted) into the inner peripheral surface of the end portion 8A of the outer race 8.

The elastic ring 168 has an annular part 168A, an inclined connection part 168B, and lips 172 and 174. The annular part 168A has a circular annular shape, is in contact with the end surface of the end portion 8A of the outer race 8, and expands inward in radial directions toward the outer peripheral surface 4A of the cylindrical part of the hub 4 so as to be orthogonal to the central axis Ax of the hub bearing 1. The annular part 168A faces the flange surface 4B of the outboard side flange 18.

The inclined connection part 168B is located radially inside the annular part 168A. The inclined connection part 168B extends obliquely from the annular part 168A radially inward and toward the inboard side, is bent so as to be orthogonal to the central axis Ax of the hub bearing 1, and extends further inwardly in radial directions.

The lips 172 and 174 extend from the inclined connection part 168B toward the hub 4 of the hub bearing 1. Each of the lips 172 and 174 is made of only an elastic material, and is a thin plate-like circular ring extending from the inclined connection part 168B, and the distal end of each lip is brought into contact with the rotational sealing member 160. Whereas the stationary sealing member 167 is mounted on the stationary outer race 8, the hub 4 rotates, so that the lips 172 and 174 slide on the rotational sealing member 160 fixed to the hub 4. The lip 172 is a radial lip, that is, a grease lip, and extends radially inward and toward the inboard side. The lip 172 plays a main role for preventing the lubricant from flowing out of the inside of the hub bearing 1. The lip 174 is a dust lip that plays a main role of preventing foreign matter from flowing into the hub bearing 1 from the outside.

An annular clearance 180 is provided between the end portion 8A of the outer race 8 and the flange surface 4B of the hub 4. Foreign matter may enter through the clearance 180 into the space 182 between the annular part 168A of the sealing device 20 and the flange surface 4B. Conversely, foreign matter in the space 182 can be discharged through the clearance 180.

The rotational sealing member 160 is a composite structure having a rigid ring 162 and an elastic ring 164. The rigid ring 162 is made of a rigid material such as a metal. The rigid ring 162 includes a sleeve part 162A and a flange part 162B extending radially outward from sleeve part 162A. The cylindrical part of the hub 4 is engaged by interference fit (that is, is press-fitted) into the sleeve part 162A. The flange part 162B is brought into contact with the flange surface 4B of the hub 4.

The elastic ring 164 adheres closely to both surfaces of the flange part 162B. The elastic ring 164 has an annular circular part 186 and multiple water-discharging protrusions 140 on the side of the sleeve part 162A of the rigid ring 162. The elastic ring 164 also has an annular seal protrusion (annular part) 188 on the side opposite to the sleeve part 162A. The water-discharging protrusions 140 have the same shape and the same size, and are arranged at equiangular intervals in the circumferential direction. The water-discharging protrusions 140 protrude into the space 182.

The multiple water-discharging protrusions 140 are integrally mounted on the circular part 186. The elastic ring 164 is made of an elastic material, for example, an elastomer material. The elastic ring 164 may be formed of a resin material, an elastomer material, a resin material containing at least one of metal powder and ceramic powder, or an elastomer material containing at least one of metal powder and ceramic powder. In a case in which the elastic ring 164 contains at least one of metal powder and ceramic powder, the water-discharging protrusions 140 and the circular part 186 have superior durability against the impact of hard foreign matter and have superior wear resistance. Holes 55 are formed on the circular part 186, each hole being a trace of a post 76 of the mold.

The annular seal protrusion 188 is sandwiched between the rotational sealing member 160 and the flange surface 4B, and prevents or reduces contact of water with the flange surface 4B, thereby suppressing generation of rust at the hub 4.

Although detailed description of each water-discharging protrusion 140 is omitted, each water-discharging protrusion 140 has an inclined side surface that promotes the outflow of water in the space 182, similarly to the inclined side surface 40C of each water-discharging protrusion 40 of the first embodiment.

The stationary sealing member 167 has an annular outer labyrinth lip 192. The outer labyrinth lip 192 protrudes from the annular part 168A of the elastic ring 168 toward the outboard side flange 18 of the hub 4, but is not in contact with either the hub 4 or the rotational sealing member 160. The outer labyrinth lip 192 is aligned with the multiple water-discharging protrusions 140 in radial directions, and is located radially outside the multiple water-discharging protrusions 140.

As is clear from comparison between Fig. 2 and Fig. 12, the rotational sealing member 160 according to the third embodiment can be manufactured by the above-described manufacturing method using substantially the same mold as the above-described mold 60.

### OTHER MODIFICATIONS

Although embodiments of the present invention have been described above, the foregoing description is not intended to limit the present invention. Various modifications including omission, addition, and substitution of structural elements may be made within the scope of the present invention.

For example, in the above-described embodiments, the hub 4 and the inner race 6 that are inner members are rotating members, and the outer race 8 that is an outer member is a stationary member. However, the present invention is not limited to the above-described embodiments, and it can be applied to sealing multiple members that rotate relative to each other. For example, the inner members may be stationary, and the outer member may rotate, or all of these members may rotate.

The use of the present invention is not limited to sealing of the hub bearing 1. For example, the sealing device or the sealing structure according to the present invention may be applied to a differential gear mechanism or other power transmission mechanism of an automotive vehicle, a bearing or other support mechanism for a drive shaft of an automotive vehicle, a bearing or other support mechanism for a rotary shaft of a pump.

### REFERENCE SYMBOLS

- 1:: Hub Bearing
- 4:: Hub (Inner Member)
- 6:: Inner Race (Inner Member)
- 8:: Outer Race (Outer Member)
- 20: Sealing Device
- 21:: Sealing Device
- 24:: First Sealing Member
- 26:: Second Sealing Member
- 32:: Elastic Ring
- 34:: Rigid Ring
- 34A:: Sleeve Part
- 34B:: Flange Part
- 40:: Water-discharging Protrusion
- 51:: Annular Part
- 52:: Circular Protrusion (Circular Part)
- 70:: Protrusion Cavity
- 72:: Circular Cavity
- 74:: Cylindrical Cavity
- 60:: Mold
- 61:: First Mold
- 64:: Annular Cavity
- 62:: Second Mold
- 76:: Post
- 53:: Circular Part
- 140:: Water-discharging Protrusion
- 160:: Rotational Sealing Member (Sealing Member)
- 167:: Stationary Sealing Member
- 168:: Elastic Ring
- 168A:: Annular Part
- 168B:: Inclined Connection Part
- 169:: Rigid Ring
- 186:: Circular Part
- 188:: Annular Seal Protrusion (Annular Part)

## Claims

1. A method of manufacturing a sealing member provided in a sealing device located between an inner member and an outer member that rotate relative to each other, for sealing a gap between the inner member and the outer member, the sealing member comprising a rigid ring formed of a rigid material and for being mounted on the inner member, the rigid ring comprising a sleeve part and a flange part extending radially outward from the sleeve part; and an elastic ring formed of an elastic material adhering closely to both surfaces of the flange part, the elastic ring comprising an annular circular part and multiple water-discharging protrusions on a side of the sleeve part of the rigid ring, the elastic ring comprising an annular part on a side opposite the sleeve part, the method comprising:
preparing a first mold comprising a cylindrical cavity in which the sleeve part of the rigid ring is supported, an annular circular cavity for forming the circular part, multiple protrusion cavities for forming the multiple water-discharging protrusions, and multiple posts disposed in the circular cavity and being brought into contact with the flange part of the rigid ring;
preparing a second mold comprising an annular cavity for forming the annular part;
inserting the sleeve part of the rigid ring into the cylindrical cavity of the first mold;
bringing the first mold and the second mold together such that the flange part of the rigid ring is disposed within the annular cavity of the second mold;
filling the annular cavity of the first mold and the circular cavity and the multiple protrusion cavities of the second mold with a material for the elastic ring while bringing the flange part into contact with the multiple posts; and
removing the sealing member by separating the second mold from the first mold after curing the material for the elastic ring.

2. The method of manufacturing a sealing member according to claim 1, wherein each of the water-discharging protrusions of the sealing member to be manufactured comprises an inclined side surface that intersects at an acute angle with respect to a rotational direction in which at least one of the inner member and the outer member rotates, and wherein the multiple posts of the first mold are disposed in portions different from portions forming the inclined side surface in the circular cavity.

3. A mold for manufacturing a sealing member provided in a sealing device located between an inner member and an outer member that rotate relative to each other for sealing a gap between the inner member and the outer member, the sealing member comprising a rigid ring formed of a rigid material and for mounted on the inner member, the rigid ring comprising a sleeve part and a flange part extending radially outward from the sleeve part; and an elastic ring formed of an elastic material adhering closely to both surfaces of the flange part, the elastic ring comprising an annular circular part and multiple water-discharging protrusions on a side of the sleeve part of the rigid ring, the elastic ring comprising an annular part on a side opposite the sleeve part, the mold comprising:
a first mold comprising a cylindrical cavity in which the sleeve part of the rigid ring is supported, an annular circular cavity for forming the circular part, multiple protrusion cavities for forming the multiple water-discharging protrusions, and multiple posts disposed in the circular cavity and being brought into contact with the flange part of the rigid ring; and
a second mold comprising an annular cavity for forming the annular part.
